(19) 
**Europäisches Patentamt**
**European Patent Office**
**Office européen des brevets**

(11) **EP 2 431 794 A1**

(12) **EUROPEAN PATENT APPLICATION**
published in accordance with Art. 153(4) EPC

(43) Date of publication:
**21.03.2012 Bulletin 2012/12**

(51) Int Cl.:
*G02F 1/133* (2006.01)   *G02F 1/1368* (2006.01)
*G09F 9/30* (2006.01)   *G09F 9/35* (2006.01)
*G09G 3/20* (2006.01)   *G09G 3/36* (2006.01)

(21) Application number: **10774657.0**

(22) Date of filing: **23.02.2010**

(86) International application number:
**PCT/JP2010/001173**

(87) International publication number:
**WO 2010/131395 (18.11.2010 Gazette 2010/46)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **13.05.2009 JP 2009116641**

(71) Applicant: **Sharp Kabushiki Kaisha Osaka-shi, Osaka 545-8522 (JP)**

(72) Inventor: **SAITOH, Kohji Osaka-shi, Osaka 545-8522 (JP)**

(74) Representative: **Goddar, Heinz J. Forrester & Boehmert Pettenkoferstrasse 20-22 80336 München (DE)**

(54) **LIQUID CRYSTAL DISPLAY PANEL AND LIQUID CRYSTAL DISPLAY DEVICE**

(57) A liquid crystal display panel (1) of the present invention is a liquid crystal display panel (1) of an active matrix type, increasing a voltage applied to liquid crystals by applying a voltage to each storage capacitor line (CS) connected to a storage capacitor (13) in each of pixels, the voltage applied to the liquid crystals being increased when an image is to be displayed, the pixels being connected to the each storage capacitor line (CS) in such a manner that a plurality of pixels of one specific primary color are connected to a specific storage capacitor line (CS), the plurality of pixels of the one specific primary color being in a horizontal row of a display region (2) of the liquid crystal display panel (1), the plurality of pixels each being connected to the specific storage capacitor line (CS) via the storage capacitor (13), the pixels each including a drain electrode of a switching element (11) to which a voltage is applied, the voltage applied to the drain electrode taking a value in accordance with an effective voltage to be applied to the storage capacitor (13), the value corresponding to the specific one primary color of each of the pixels including the storage capacitor (13). This makes it possible to prevent deterioration in display quality of a display image, in the liquid crystal display panel (1) which is configured to apply a voltage to the storage capacitor (13) in each of the pixels so as to increase a voltage applied to the liquid crystals.

F I G. 1

EP 2 431 794 A1

**Description**

Technical Field

The present invention relates to a liquid crystal display panel that employs a driving method in which a voltage applied to liquid crystals is increased by applying a voltage to a storage capacitor in each pixel. The present invention also relates to a liquid crystal display device including the liquid crystal display panel.

Background Art

In recent years, it has been in particular strongly desired that a liquid crystal display device has an improved operational reliability and a reduced power consumption. A variety of technical innovations have been made so as to fulfill such desire. Among the innovations, a display technique that utilizes a storage capacitor of a pixel has attracted attention.

One example of such a display technique is disclosed in Patent Literature 1. Patent Literature 1 discloses a liquid crystal display device that includes a storage capacitor driving circuit for supplying a storage capacitor driving voltage to storage capacitors of liquid cells provided on one scanning line. The storage capacitor driving voltage varies in synchronization with a frame cycle. According to this exemplary display technique, an amplitude of a voltage that is outputted from a transistor for driving liquid crystals can be increased by an effect of the storage capacitor. This allows for reduction in a voltage outputted from a signal line driving circuit. Further, it is also possible to improve reliability of a circuit element using low-temperature polysilicon.

Citation List

Patent Literature 1
Japanese Patent Application Publication, Tokukai, No. 2001-255851 A (Publication Date: September 21, 2001)

Summary of Invention

Technical Problem

However, a conventional display technique disclosed in Patent Literature 1 has a problem such that display quality of a color image is deteriorated. Specifically, color grades of gray-level color displays (gray display) of lower gray levels gradually become bluish as compared to a color grade of white display.

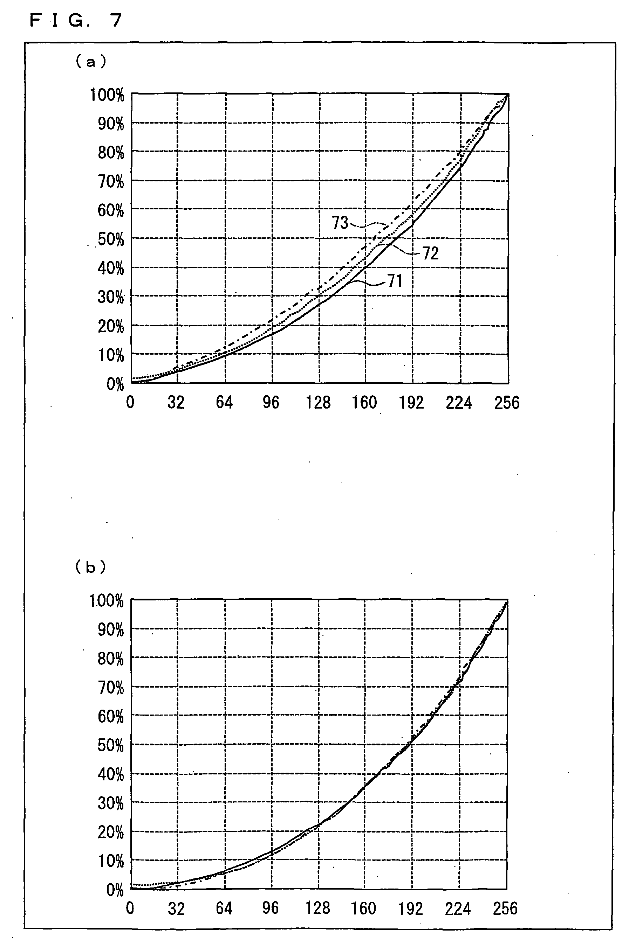

Generally, in a liquid crystal display device, applied voltage - transmittance (V-T) characteristics of pixels vary depending on colors of pixels. For example, in a case where RGB pixels are employed, transmittances of colors of shorter wavelengths rise more quickly, that is, the rise of the transmittances is quicker in the order of blue, green and red in a graph showing the V-T characteristics (see Fig. 7). However, this gives a rise to a problem such that, in a case where y is set based on a white luminance ratio, for example, a blue luminance ratio in chromaticity coordinates for gray display (input gray level = 64) is higher than that in a chromaticity coordinates for white display (input gray level = 255). As such, the gray display becomes bluish. Consequently, a displayed color image appears bluish and cannot be displayed in an originally-intended color.

The present invention is attained in view of the above problem, and an object of the present invention is to provide (i) a liquid crystal display panel in which a voltage is applied to a storage capacitor so as to increase a voltage that is applied to liquid crystals, which liquid crystal display panel makes it possible to prevent reduction in quality of a display image, and (ii) a liquid crystal display device including the liquid crystal display panel.

Solution to Problem

In order to solve the above problems, the liquid crystal display panel of the present invention is a liquid crystal display panel of an active matrix type, increasing a voltage applied to liquid crystals by applying a voltage to each storage capacitor line connected to a storage capacitor in each of pixels, the voltage applied to the liquid crystals being increased when an image is to be displayed, the pixels being connected to the each storage capacitor line in such a manner that a plurality of pixels of one specific primary color are connected to a specific storage capacitor line, the plurality of pixels of the one specific primary color being in a horizontal row of a display region of the liquid crystal display panel, the plurality of pixels each being connected to the specific storage capacitor line via the storage capacitor, the pixels each including a drain electrode of a switching element to which a voltage is applied, the voltage applied to the drain electrode taking a value in accordance with an effective voltage to be applied to the storage capacitor, the value corresponding to the specific one primary color of each of the pixels including the storage capacitor.

According to the above configuration, in the voltage that is applied to the liquid crystals of each of the pixels in the display region, an instantaneous voltage increase effect occurs due to driving of the storage capacitor. Consequently, a higher voltage can be applied to the liquid crystals. The instantaneous voltage increase effect that occurs at this time corresponds to a color of each of the pixels. This is for the following reason. That is, a voltage that is applied to a drain of a switching element in each of the pixels is applied in accordance with an effective voltage applied to a corresponding storage capacitor, and takes a value corresponding to a color of each of the pixels.

According to the present invention, it is therefore possible to flexibly control a voltage that is applied to a drain of a switching element in each of the pixels in accordance with an effective voltage applied to a corresponding storage capacitor. As a result of the control, the voltage applied to the drain electrode takes a value corresponding to a color of each of the pixels. Consequently, it is possible to correct input gray scale - transmittance (normalized luminance) characteristics so that, in accordance with the characteristics that vary depending on respective colors of the pixels, identical input gray scale has identical transmittance irrespective of each color of the pixels.

Accordingly, the liquid crystal display panel of the present invention provides an effect such that deterioration in quality of a display image is prevented when the image is displayed in a system in which a voltage that is applied to the liquid crystals in each of the pixels is increased by applying a voltage to the storage capacitor in each of the pixels.

In order to solve the above problem, a liquid crystal display device of the present invention includes any of the liquid crystal display panels.

With the configuration, it is possible to provide a liquid crystal display device that is capable of preventing deterioration in quality of a display image when the image is displayed in a system in which a voltage that is applied to the liquid crystals in each of the pixels is increased by applying a voltages that is applied to the storage capacitor in each of the pixels.

For a fuller understanding of the nature and advantages of the invention, reference should be made to the ensuing detailed description taken in conjunction with the accompanying drawings.

Advantageous Effects of Invention

As discussed above, a liquid crystal display panel according to the present invention is a liquid crystal display panel in which a voltage is applied to a storage capacitor in each pixel so as to increase a voltage that is applied to liquid crystals. In this liquid crystal display panel, reduction in quality of a display image can be prevented.

Brief Description of Drawings

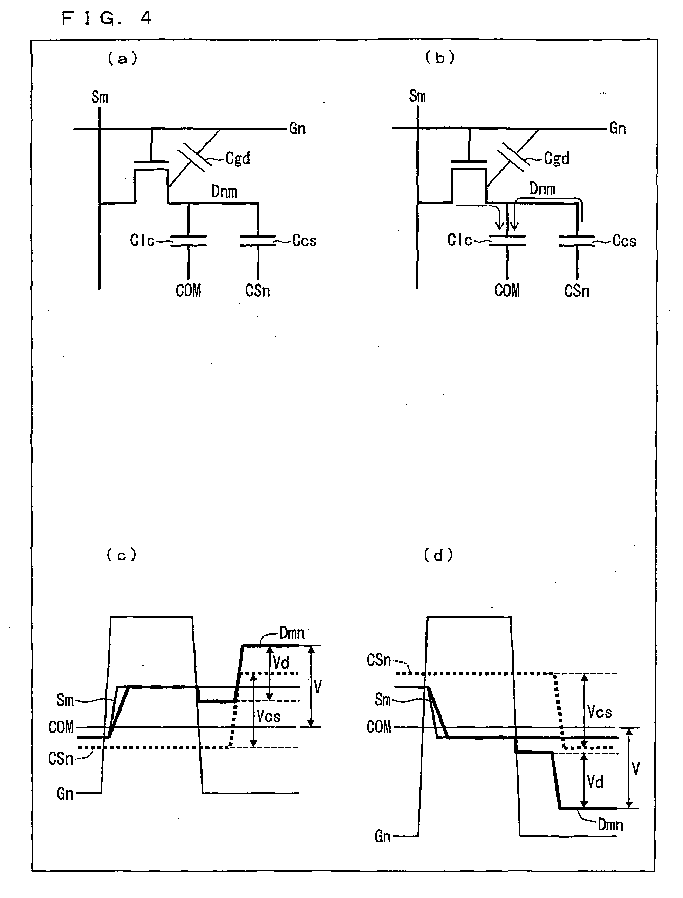

Fig. 1

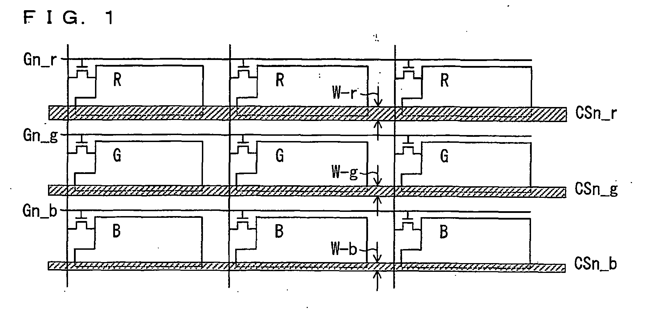

Fig. 1 is a diagram showing a part of a display region of a liquid crystal display panel and explaining in particular a configuration in which widths of storage capacitor lines are different depending on kinds of pixels.
Fig. 2

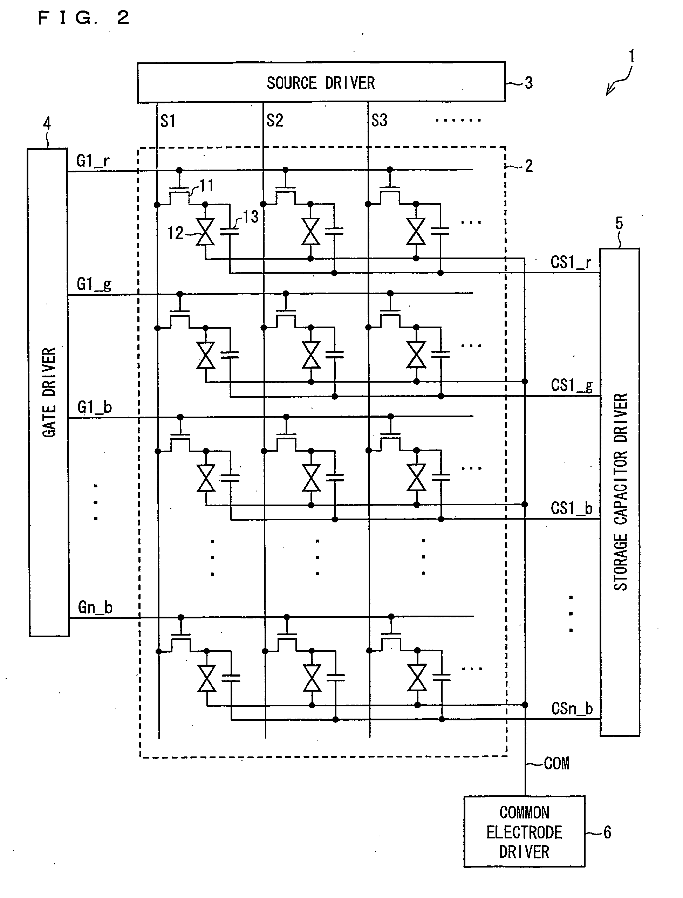

Fig. 2 is a diagram showing a configuration of a liquid crystal display panel according to a present embodiment.
Fig. 3

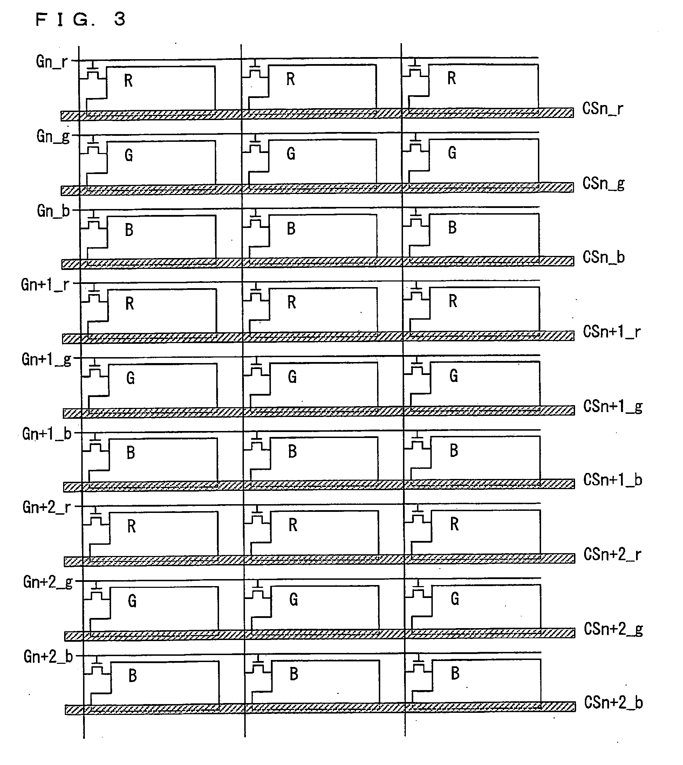

Fig. 3 is a diagram showing how RGB pixels are arranged in a display region of the liquid crystal display panel according to the present embodiment.
Fig. 4
(a) of Fig. 4 is a diagram showing an equivalent circuit of any one pixel formed in the display region of the liquid crystal display panel. (b) of Fig. 4 is a diagram showing a current flow that occurs when the pixel is driven. (c) of Fig. 4 is a diagram showing voltage waveforms of respective signals supplied to the pixel. (d) of Fig. 4 is a diagram showing voltage waveforms of the respective signals supplied to the pixel.
Fig. 5

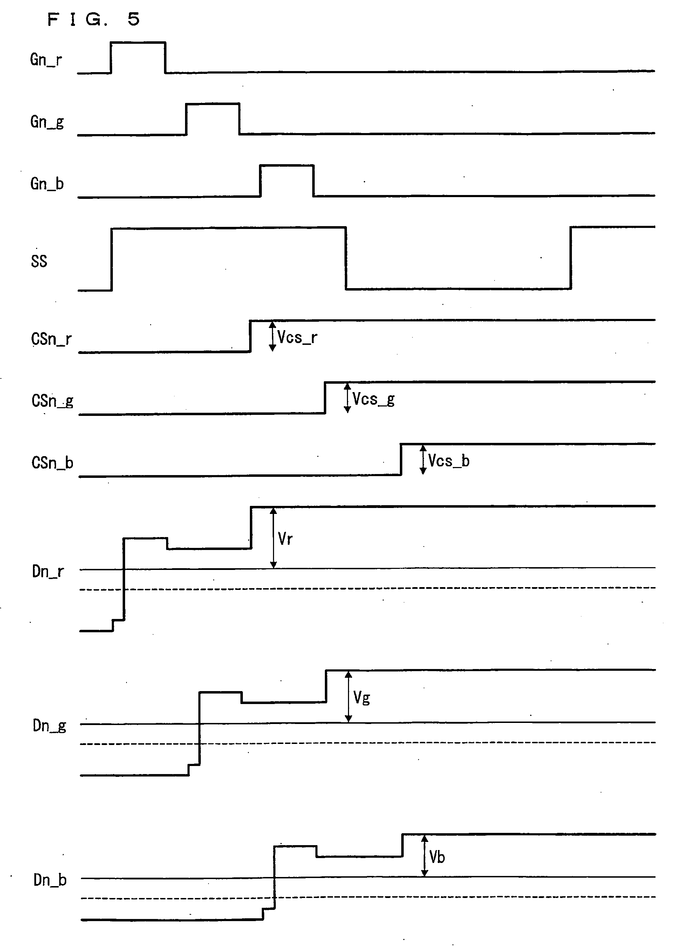

Fig. 5 is a diagram showing waveforms of respective driving signals supplied to the RGB pixels in a case where positive voltages are applied to liquid crystals of the RGB pixel.
Fig. 6

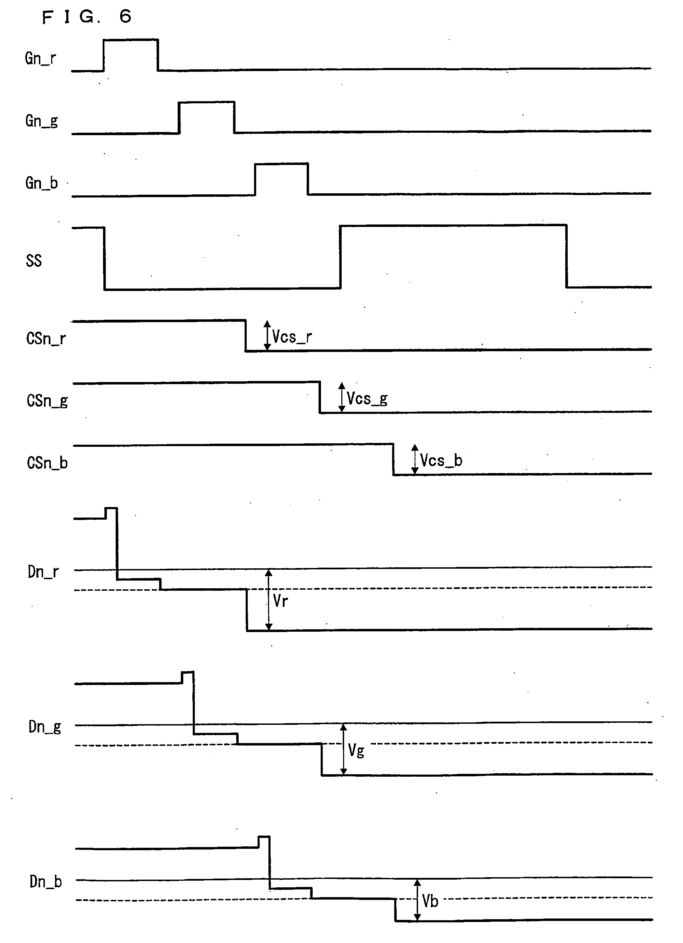

Fig. 6 is a diagram showing waveforms of the respective driving signals supplied to the RGB pixels in a case where negative voltages are applied to the liquid crystals of the RGB pixels.
Fig. 7
Fig. 7 is a diagram showing an effect provided by a liquid crystal display panel according to one embodiment of the present invention.

Fig. 8

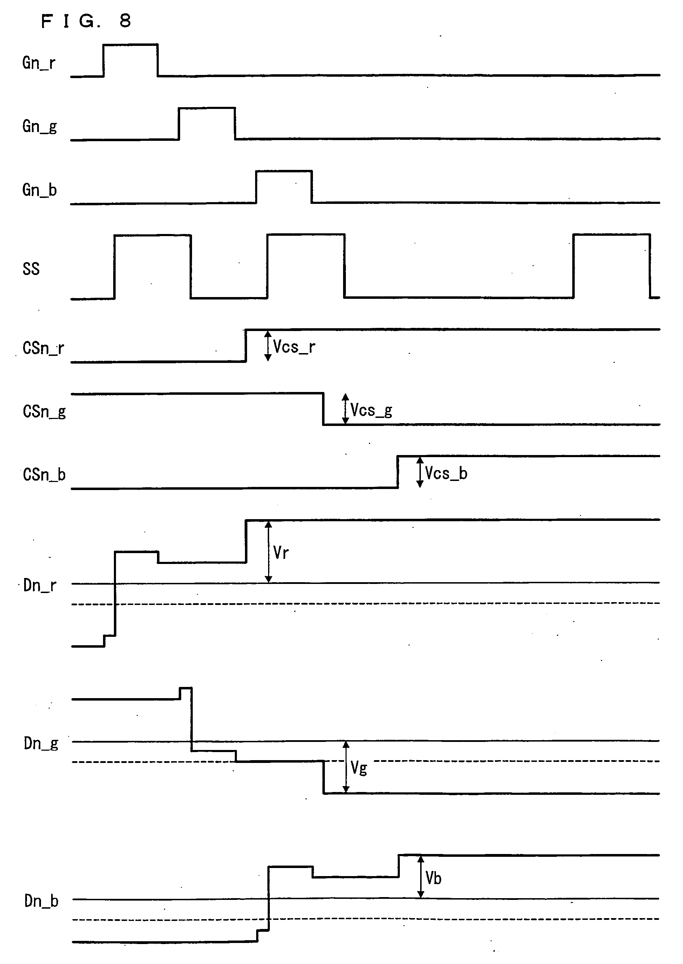

Fig. 8 is a diagram showing waveforms of respective driving signals supplied to the RGB pixels in a case where the voltages of polarities that are independent from each other are applied to liquid crystals of the RGB pixels.

Fig. 9

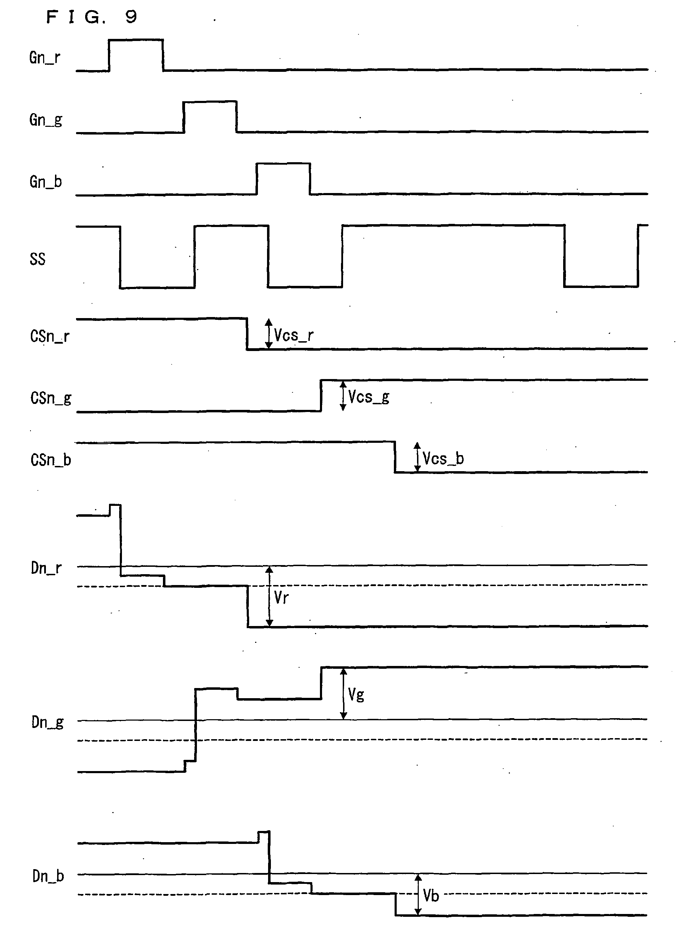

Fig. 9 is a diagram showing waveforms of the respective driving signals supplied to the RGB pixels in a case where the voltages of polarities that are independent from each other are applied to the liquid crystals of the RGB pixels.

Fig. 10

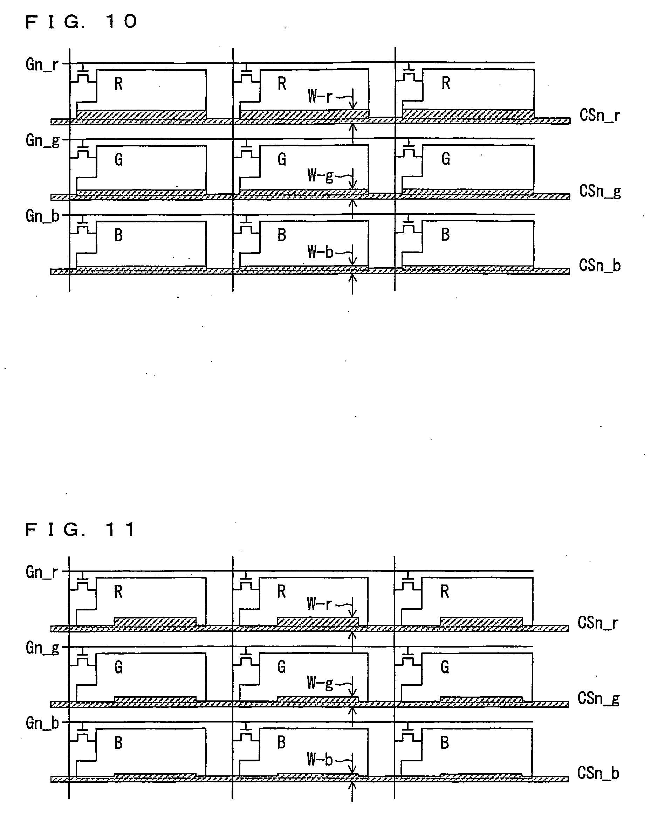

Fig. 10 is a diagram showing a part of a display region of a liquid crystal display panel (First Modified Example) according to one embodiment of the present invention.

Fig. 11

Fig. 11 is a diagram showing a part of a display region of a liquid crystal display panel (Second Modified Example) according to one embodiment of the present invention.

Fig. 12

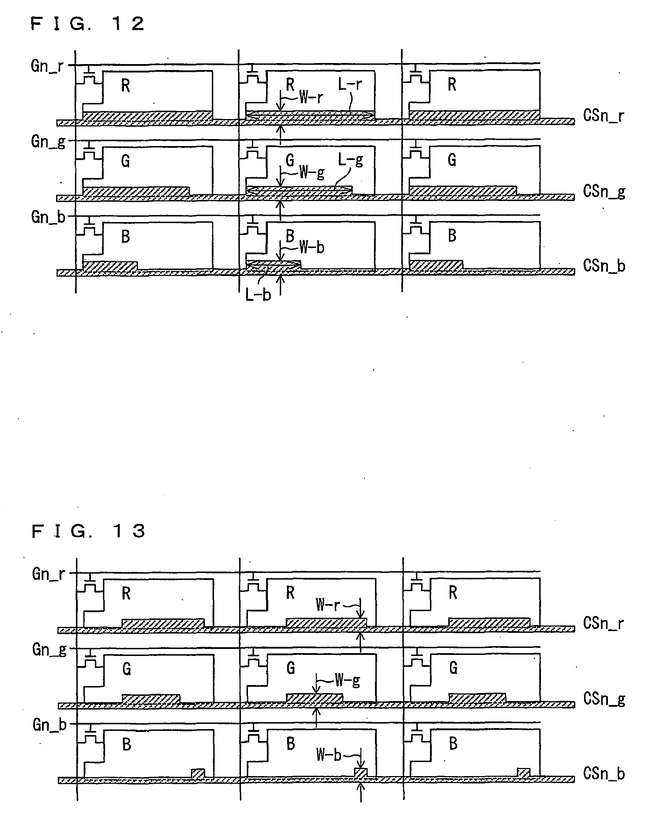

Fig. 12 is a diagram showing a part of a display region of a liquid crystal display panel (Third Modified Example) according to one embodiment of the present invention.

Fig. 13

Fig. 13 is a diagram showing a part of a display region of a liquid crystal display panel (Fourth Modified Example) according to one embodiment of the present invention.

Fig. 14

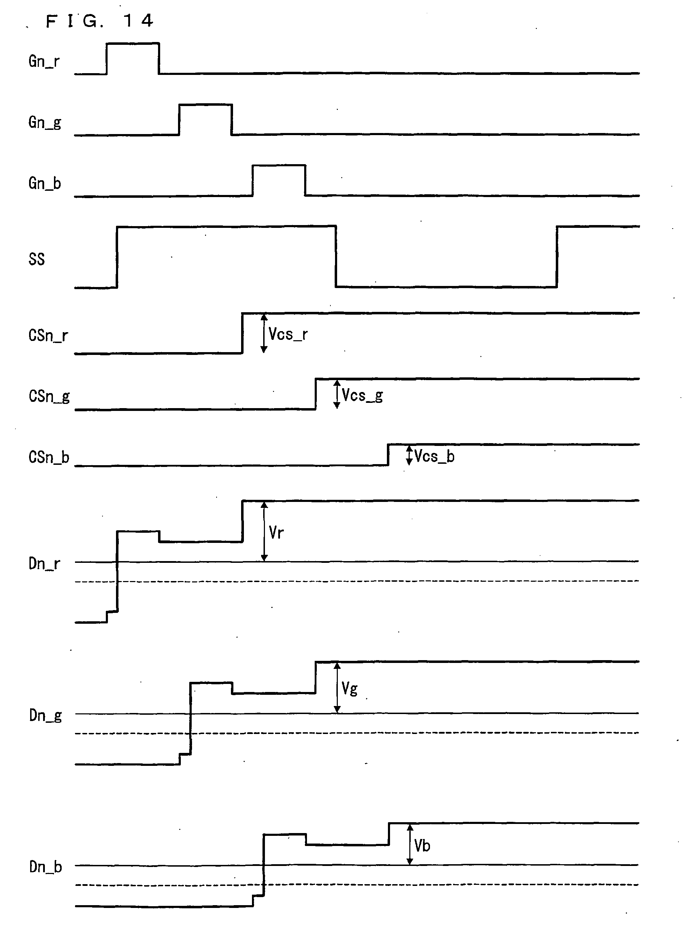

Fig. 14 is a diagram showing waveforms of respective driving signals supplied to RGB pixels in a case where positive voltages are applied to liquid crystals of the respective RGB pixels.

Fig. 15

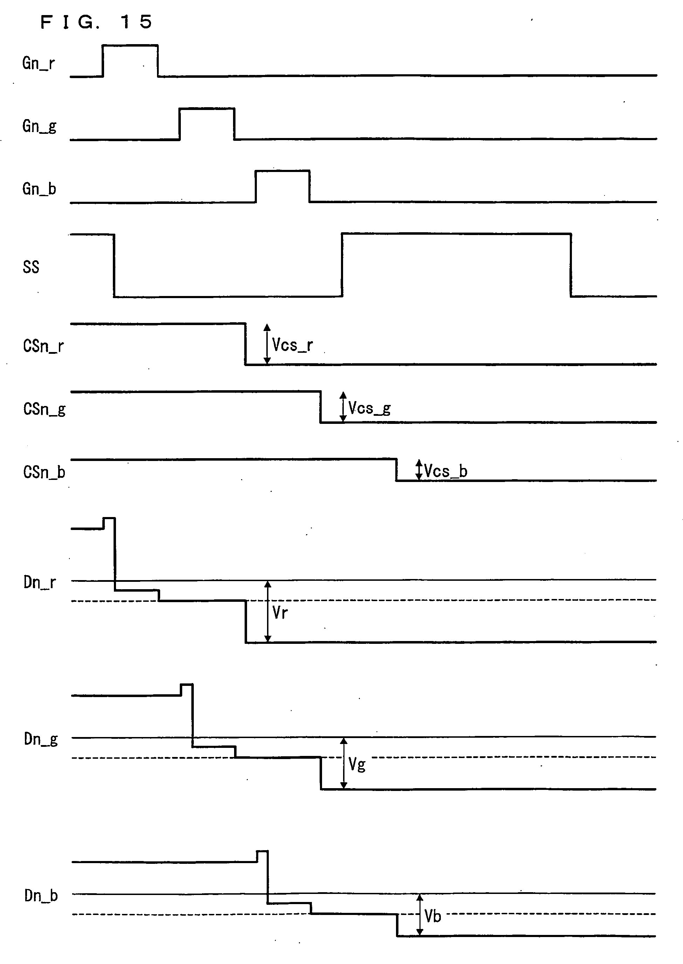

Fig. 15 is a diagram showing waveforms of the respective driving signals supplied to the RGB pixels in a case where negative voltages are applied to the liquid crystals of the RGB pixels.

Fig. 16

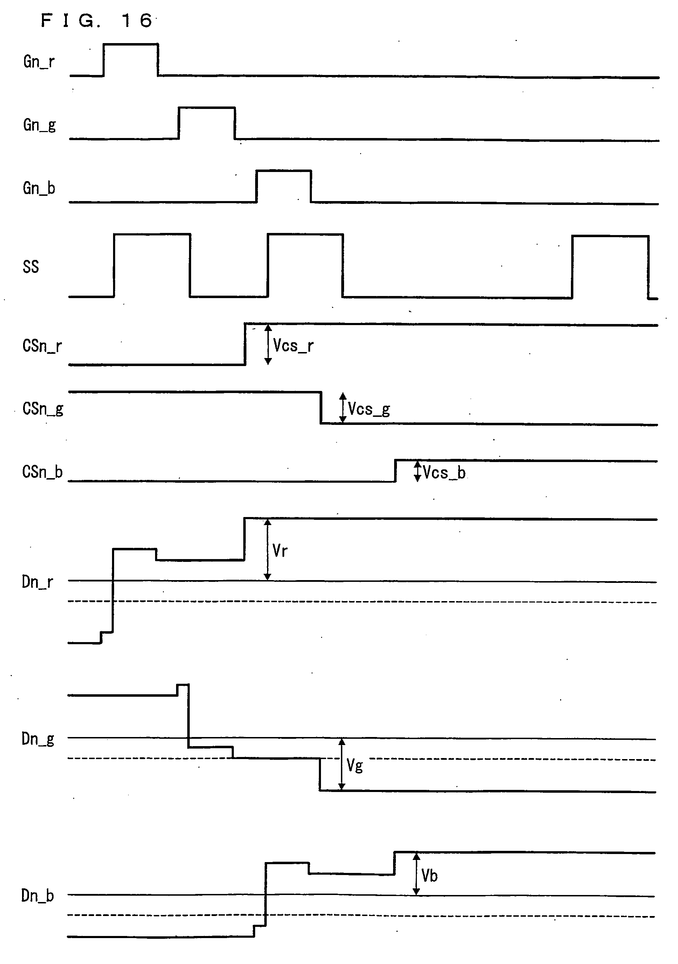

Fig. 16 is a diagram showing waveforms of respective driving signals supplied to the RGB pixels in a case where the voltages of polarities that are independent from each other are applied to liquid crystals of the RGB pixels.

Fig. 17

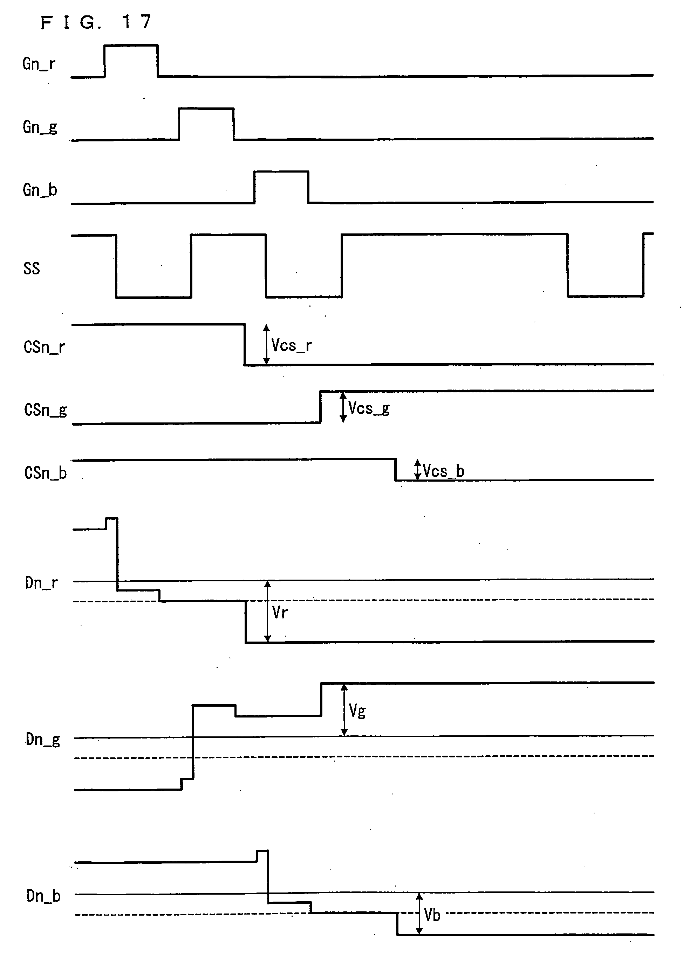

Fig. 17 is a diagram showing waveforms of the respective driving signals supplied to the RGB pixels in a case where voltages of polarities that are independent from each other are applied to the liquid crystals of the RGB pixels.

Description of Embodiments

[Embodiment 1]

Embodiment 1 of the present invention is explained below with reference to Figs. 1 through 9.

(Configuration of Liquid Crystal Display Panel)

Fig. 2 is a diagram showing how a liquid crystal display panel 1 according to the present embodiment is configured. The liquid crystal display panel 1 shown in Fig. 2 is a so-called active matrix liquid crystal panel. The liquid crystal display panel 1 has a configuration in which liquid crystals are sandwiched between two transparent substrates (which are a driving substrate and a counter substrate), although this is not illustrated in the drawings.

The driving substrate is provided with a source driver 3, a gate driver 4, a storage capacitor driver (storage capacitor driving circuit) 5, and a common electrode driver 6. The gate driver 4 outputs gate signals to respective gate bus lines G1_r, G1_g, G1_b, ..., and Gn_b so that a display region 2 is scanned. The source driver 3 outputs source signals to respective source bus lines S1, S2, S3, and so on. The common electrode driver 6 applies one common voltage Vcom to all liquid crystal cells via a common electrode COM provided to the counter substrate.

Pixels for image display are formed so as to correspond to respective intersections of the gate bus lines G1_r, ... and Gn_b and the source bus lines S1, S2, S3, and so on in the display region 2 of the liquid crystal display panel 1. The pixels thus formed form the single display region 2. The display region 2 has n rows x m columns of the pixels, where n and m are integers equal to or greater than 1. In each of the pixels in the display region 2, a TFT (thin film transistor) 11 for liquid crystal driving is provided. The each TFT 11 is a type of switching element, specifically, a thin film transistor formed in the driving substrate. A gate of the each TFT 11 is connected to a corresponding one of the gate bus lines, whereas a source of the each TFT 11 is connected to a corresponding one of the source bus lines.

Liquid crystal cells 12 are provided to pixel electrodes that are connected to drain electrodes of the respective TFTs 11. The counter substrate is provided with the common electrode and lines thereof. The common electrode and lines thereof are provided so as to sandwich the liquid crystal cells 12.

The gate driver 4 sequentially scans the gate bus lines G1_r, G1_g, G1_b, ..., and Gn_b, so that pixels in one horizontal row are selected in each horizontal negative, and a polarity of Dn_g is shifted to positive. Further, a polarity of Dn_b is shifted to negative. That is, when the liquid crystal display panel 1 is driven in the m+1th frame, Vr > Vg > Vb (all voltages are in absolute values) even though Vcs_r = Vcs_g = Vcs_b (all voltages are in absolute values). As a result, it becomes possible to make an adjustment so that values of the voltages that are applied to voltages in the respective RGB pixels are set to values corresponding to the colors of the respective RGB pixels. This makes it possible to keep a relation between an input gray level and a display luminance in each of the RGB pixels constant, irrespective of color characteristics of the respective RGB pixels. Therefore, it is possible to obtain an effect similar to the effect shown in Fig. 7.

[Embodiment 2]

Embodiment 2 according to the present invention is explained below with reference to Figs. 10 through 13. Note that members identical with the members described in Embodiment 1 are given the identical reference numerals, and explanations thereof are omitted here.

The present embodiment explains several modified examples in each of which how storage capacitor lines are provided in a display region of a liquid crystal display panel 1 is varied. First of all, terms that appear arranged in the display region of the liquid crystal display panel according to the present embodiment.

In the display region of the liquid crystal display panel 1 of the present embodiment, pixels of three different colors are provided. "Colors" here indicate primary colors of a display image. In the present embodiment, the primary colors are red, green, and blue. Accordingly, the pixels formed in the display region 2 are three kinds of pixels in including pixels for displaying red (R pixels), pixels for displaying green (B pixels), and pixels for displaying blue (B pixels).

As shown in Fig. 3, in the liquid crystal display panel 1, only pixels of any one of the three different colors out of the pixels of the three different colors are connected to any corresponding one of the gate bus lines. For example, only the R pixels are connected to Gn_r. Moreover, only the G pixels are connected to Gn_g, and only the B pixels are connected to Gn_b.

Further, in the liquid crystal display panel 1, only pixels of any one of the three different colors out of the pixels of the three different colors are connected to any corresponding one of the storage capacitor lines. For example, only the R pixels are connected to CSn_r. Further, only the G pixels are connected to CSn_g, and only the B pixels are connected to CSn_b.

In such circumstances, a gate signal outputted to a given one of the gate bus lines is supplied to pixels (the R, G, or B pixels) which are connected to the given one of the gate bus lines. Similarly, a driving signal outputted to a given one of the storage capacitor lines is supplied to pixels (the R, G, or B pixels) which are connected to the given one of the storage capacitor lines. That is, each horizontal row of the pixels of each one color can be driven separately by use of a corresponding gate signal. Further, each horizontal row of the pixels of each one color can be driven separately by use of corresponding storage capacitor driving signals.

In the liquid crystal panel 1 according to the present invention, (i) shapes of the respective storage capacitor lines are set in accordance with colors of corresponding pixels or (ii) voltage amplitudes of the respective driving signals that are outputted to the respective storage capacitor lines are set to values in accordance with colors of corresponding pixels. It is therefore possible to carry out control so that sizes of the respective voltages (liquid crystal driving voltages) which are applied to the liquid crystals of the respective pixels are set to values corresponding to the colors of the corresponding pixels. This control is described in detail later.

(Pixel Driving Principle)

With reference to Fig. 4, the following explains a pixel driving principle of any one pixel formed in the display region 2. Fig. 4 is a diagram showing a pixel driving principle in the liquid crystal display panel 1. Note that all of the pixels in the display region 2 are similarly driven on the pixel driving principle shown in Fig. 4, irrespective of colors of the pixels. For this reason, a color of the pixel is not particularly specified in the following explanation.

(a) of Fig. 4 is a diagram showing an equivalent circuit of any one of the pixels formed in the display region 2 of the liquid crystal display panel 1. (a) of Fig. 4 shows an equivalent circuit of a pixel connected to a source bus line Sm and a gate bus line Gn. The pixel includes one TFT for driving liquid crystals. The TFT has a gate connected to the gate bus line Gn and a source connected to the source bus line Sm. Further, the TFT has a drain electrode connected to a common electrode line COM via a liquid crystal capacitor Clc and to a storage capacitor line CSn via a storage capacitor Ccs. In addition to the liquid crystal capacitor Clc and the storage capacitor Ccs, a capacitance Cgd that occurs between the gate and drain of the TFT is formed in the pixel. Generally, a relation of Clc, Ccs, and Cgd is Cgd < Clc < Ccs.

(b) of Fig. 4 is a diagram showing a current flow that occurs when the pixel is driven. (c) of Fig. 4 is a diagram showing voltage waveforms of respective signals that are applied to the pixel. As shown in (b) and (c) of Fig. 4, when the pixel of the liquid crystal display panel 1 is driven, a gate signal is outputted to the gate bus line Gn so that the gate of the TFT is turned on firstly. At this time, a source signal is outputted to the source bus line Sm so that a current flows from the source to drain of the TFT. As a result, charging with a drain voltage Vd occurs. Note that a direct-current signal is outputted to COM (direct-current driving).

Then, the gate of the TFT is tuned off. This causes Vd to be fed-through due to influence of Cgd. That is, a value of Vd is slightly decreased.

Then, a voltage polarity of the driving signal that is outputted to the storage capacitor line is shifted to positive. As a result, a given effective voltage is applied to Ccs so as to consequently cause an instantaneous increase in Vd. That is, the value of Vd is greatly changed (increased) in a positive polarity direction. With this arrangement, it is therefore possible to have a larger value of a voltage applied to liquid crystals, as compared to a voltage applied in a driving method in which no signal is outputted to any storage capacitor line.

As shown in (c) of Fig. 4, in the liquid crystal display panel 1, a positive signal is supplied to a pixel in one given frame. As shown in (d) of Fig. 4, in a frame succeeding to the one given frame, a negative signal that is opposite in polarity to the signal of the preceding frame is supplied to the pixel. (d) of Fig. 4 is a diagram showing voltage waveforms of the respective signals that are supplied to the pixel. In an example shown in (d) of Fig. 4, a polarity of the driving signal that is outputted to the storage capacitor line is shifted to negative so that Vd is instantaneously decreased via Ccs. That is, the value of Vd is greatly changed in a negative polarity direction. With this arrangement, it is therefore possible to have a voltage of a larger value, which voltage is applied to liquid crystals in each pixel of the liquid crystal display panel 1, as compared to a voltage applied in the driving method in which no signal is outputted to any storage capacitor line.

(Method for Calculating Voltage Applied to Liquid Crystal)

The voltage Vd is a voltage applied to the liquid crystals while the liquid crystal display panel 1 is driven. This voltage Vd is calculated by the following expression (1),

$$
\begin{aligned}
\mathrm{Vd} &= \{(Vs\_p - Vcgd + Vcs) - (Vs\_n - Vcgd - Vcs)\}/2 \\
&= (Vs\_p - Vs\_n + 2 \times Vcs)/2 \\
&= Vs/2 + Vcs \qquad \dots \text{Expression (1)},
\end{aligned}
$$

where: Vs_p is a source output voltage in a case where the source output voltage is positive; Vs_n is a source output voltage in a case where the source output voltage is negative; Vs is an amplitude of the source output voltage; and Vcs is a shift amount by which the value of the drain voltage is shifted in response to a CS voltage shift.

Vcs is calculated by the following expression 2,

$$
\begin{aligned}
\mathrm{Vcs} &= Vcs\_pp \times \left(Ccs / \sum C\right) \\
&= Vcs\_pp \times \{Ccs / (Ccs + Clc + Cgd + Csd + \cdots)\} \qquad \dots \qquad \text{Expression (2),}
\end{aligned}
$$

where: Vcs_pp is an amplitude of a voltage outputted to a storage capacitor line; $\sum C$ is a total of capacitance values affecting the drain electrode; and Csd is a parasitic capacitance between a source line and a drain electrode.

In the liquid crystal display panel 1 whose pixels are configured as shown in Fig. 4, voltages that are supplied to respective RGB pixel rows are controlled by controlling Ccs or Vcs_pp, based on the expressions (1) and (2).

(Shape of Storage Capacitor Line)

In the present embodiment, the storage capacitor lines are formed in the display region of the liquid crystal display panel 1. The storage capacitor lines are formed so as to have different shapes depending on colors of the pixels. Thereby, storage capacitances Ccs are controlled in accordance with respective colors of the pixels.

Fig.1 is a diagram showing a part of the display region in the liquid crystal display panel and explaining in particular a configuration that widths of the respective storage capacitor lines are varied depending on kinds of corresponding pixels. In an example shown in Fig. 1, the widths of the storage capacitor line pixels which are connected to the pixels are different depending on colors of the pixels. Specifically, $W\_r > W\_g > W\_b$, where: $W\_r$ indicates a width of a storage capacitor line CSn to which the R pixels are connected; $W\_g$ indicates a width of a storage capacitor line CSn_g to which the G pixels are connected; and $W\_b$ indicates a width of a storage capacitor line CSn_b to which the B pixels are connected.

According to the configuration, respective areas of the storage capacitor lines in contact with drain electrodes of the pixels have values in accordance with colors of corresponding pixels. As such, the storage capacitances in the pixels have values corresponding to the colors of the respective corresponding pixels. In a configuration shown in Fig. 1, $Ccs\_r > Ccs\_g > Ccs\_b$, where: $Ccs\_r$ indicates a storage capacitance in each R pixel; $Ccs\_g$ indicates a storage capacitance in each G pixel; and $Ccs\_b$ indicates a storage capacitance in each B pixel.

In the liquid crystal display panel 1 of the present embodiment, therefore, in a case where voltages outputted to the respective storage capacitor lines are identical, instantaneous voltage increase (or decrease) effects on the drain electrodes in the pixels differ in accordance with the values of the storage capacitances in the respective corresponding pixels. The greater the values of the storage capacitances are, the greater the instantaneous voltage increase (or decrease) effects are. Accordingly, in the present embodiment, $Vr > Vg > Vb$, where: $Vr$ is a value of a voltage applied to liquid crystals of any R pixel; $Vg$ is a value of a voltage applied to liquid crystals of any G pixel; and $Vb$ is a value of a voltage applied to liquid crystals of any B pixel. It is therefore possible to carry out control so that, even in a case where source voltages (input gray levels) are identical, voltages applied to the liquid crystals of the B pixels are smaller than voltages applied to the liquid crystals of the R and G pixels.

(Waveform Chart of Driving Signal: $m^{th}$ frame, common polarity)

Fig. 5 is a diagram showing waveforms of respective driving signals applied to RGB pixels in a case where positive voltages are applied to the liquid crystals of the RGB pixels.

In Fig. 5, Gn_r indicates a gate bus line which is connected to R pixels in an $n^{th}$ horizontal row in the display region 2 (where n is an integer equal to or greater than 1). Gn_g indicates a gate bus line which is connected to G pixels in the $n^{th}$ horizontal row in the display region 2. Gn_b indicates a gate bus line which is connected to B pixels in the $n^{th}$ horizontal row in the display region 2.

SS indicates a source bus line which is connected to RGB pixels.

CSn_r indicates a storage capacitor line which is connected to the R pixels in the $n^{th}$ horizontal row in the display region 2. CSn_g indicates a storage capacitor line which is connected to the G pixels in the $n^{th}$ horizontal in the display region 2. CSn_b indicates a storage capacitor line which is connected to the B pixels in the $n^{th}$ horizontal row in the display region 2.

Dn_r indicates drain electrodes that are provided in the respective R pixels in the $n^{th}$ horizontal row in the display region 2. Dn_g indicates drain electrodes that are provided in the respective G pixels in the $n^{th}$ horizontal row in the display region 2. Dn_b indicates drain electrodes that are provided in the respective B pixels in the $n^{th}$ horizontal row in the display region 2.

The following description explains in more detail shifts in the waveforms of the respective signals shown in Fig. 5. Firstly, the source driver 3 shifts a polarity of a voltage that is outputted to SS to positive. Immediately after this, the gate driver 4 shifts a polarity of a voltage that is outputted to Gn_r to positive. Due to the shifts in voltages, a polarity of a voltage that is applied to Dn_r is shifted to positive. The shift in the voltage outputted to SS is kept until a shift in a voltage outputted to Gn_b is turned back. That is, here assumed is a case where source signals of one polarity are supplied in one frame to the respective RGB pixels in different rows (three successive horizontal RGB pixel rows).

Then, a polarity of a voltage that is outputted to Gn_g is shifted to positive, after a given time period from the time at which the voltage outputted to Gn_r is turned back. This shifts a polarity of a voltage that is applied to Dn_g to positive. A shift amount of the voltage applied to Dn_g is identical with a shift amount of the voltage applied to Dn_r.

The voltage that is outputted to Gn_g is turned back, after a given time period from the time at which the voltage is shifted. A path between a source and a drain in each R pixel is open while the polarity of the voltage that is outputted to Gn_g stays positive. As shown in Fig. 5, a length of a period during which a path between a source and a drain in each pixel is open is constant irrespective of a color of the pixel.

Then, a polarity of a voltage that is outputted to Gn_b is shifted to positive, after a given time period from the time at which the voltage outputted to Gn_g is turned back. This shifts a polarity of a voltage that is applied to Dn_b to positive. A shift amount of the polarity of the voltage applied to Dn_b is identical with the shift amount of the polarity of the voltage applied to Dn_r.

The voltage that is applied to Gn_b is turned back, after a given time period from the time at which the voltage is shifted. As described above, a length of a period during which the polarity of the voltage that is outputted to Gn_b stays positive is identical with a length of a period during which the polarity of the voltage outputted to Gn_r stays positive. A path between a source and a drain in each G pixel is open while the polarity of the voltage outputted to Gn_b stays positive.

A polarity of a voltage that is outputted to CSn_r is shifted to positive, after a given time period from the time at which the voltage outputted to Gn_r is turned back to a value prior to the shift to the positive voltage. A shift amount of the voltage outputted to CSn_r is denoted by Vcs_r in Fig. 5. This shift in voltage gives rise to an instantaneous voltage increase effect that is caused by the storage capacitor connected to the drain in the R pixel. This increases the shift amount to the positive voltage applied to Dn_r. Consequently, a positive voltage Vr is applied to liquid crystals in the R pixel.

A polarity of a voltage that is outputted to CSn_g is shifted to positive, after a given time period from the time at which the voltage outputted to Gn_g is turned back to a value prior to the shift to the positive voltage. A shift amount of the voltage outputted to CSn_g is denoted by Vcs_g in Fig. 5. Vcs_g is equal to Vcs_r. The above shift in the voltage gives rise to an instantaneous voltage increase effect that is caused by the storage capacitor connected to the drain in the G pixel. This causes an increase in the shift amount to the positive voltage outputted to Dn_g. Note here that, because a width of CSn_g is smaller than a width of Cs_r, the instantaneous voltage increase effect caused by the storage capacitor in the G pixel is smaller than the instantaneous voltage increase effect caused by the storage capacitor in the R pixel. Therefore, Vr > Vg.

A polarity of a voltage that is outputted to CSn_b is shifted to positive, after a given time period from the time at which the voltage outputted to Gn_b is turned back to a value prior to the shift to the positive voltage. A shift amount of the voltage outputted to CSn_b is denoted by Vcs_r in Fig. 5. Vcs_b is equal to Vcs_g. The above shift in the voltage gives rise to an instantaneous voltage increase effect that is caused by the storage capacitor connected to the drain in the B pixel. This causes an increase in the shift amount to the positive voltage applied to Dn_b. Note here that, because a width of Csn_b is smaller than a width of CSn_g, the instantaneous voltage increase effect caused by the storage capacitor in the B pixel is smaller than the instantaneous voltage increase effect caused by the storage capacitor in the G pixel. Therefore, Vg > Vb.

As described above, when the liquid crystal display panel 1 is driven in the $m$th frame, Vr > Vg > Vb even though Vcs_r = Vcs_g = Vcs_b. It is therefore possible to make an adjustment so that values of the voltages that are supplied to the RGB pixels in one frame are set in accordance with colors of the RGB pixels. Accordingly, it is possible to keep a relation between an input gray level and a display luminance constant, irrespective of color characteristics of the RGB pixels.

(Waveform Chart of Driving Signal: $m$+1th frame, common polarity)

The liquid crystal display panel 1 according to the present embodiment carries out drive in which so-called line inversion driving and frame inversion driving are combined. That is, in the $m$+1th frame, positive voltages are applied to respective three successive RGB pixel rows that follow preceding three successive RGB pixel rows to which voltages were last applied in the $m$th frame. The voltages in this $m$+1th frame are opposite in polarity with respect to the voltages that were last applied to the preceding three successive RGB pixel rows. That is, polarities of voltages applied to respective pixel rows in one frame are inverted every three pixel rows. Further, the polarities of the voltages that are supplied to the respective pixel rows in one frame are inverted every frame.

Fig. 6 is a diagram showing the waveforms of the respective driving signals supplied to the RGB pixels in a case where negative voltages are applied to liquid crystals of the RGB pixels. As shown in Fig. 6, polarities of the voltages (except voltages that are outputted to the respective gate bus lines) that are supplied to respective voltage pixels in the $m$+1th frame are inverse to polarities of the voltages that have been supplied to the respective pixels in the $m$th frame. Timings of voltage application are completely identical with timings shown in Fig. 5.

As shown in Fig. 6, when the liquid crystal display panel 1 is driven in the $m$+1th frame, Vr > Vg > Vb even though Vcs_r = Vcs_g = Vcs_b (their polarities are negative). It is therefore possible to make an adjustment so that values of the voltages that are supplied to the respective RGB pixels in one frame are set in accordance with colors of the RGB pixels. Accordingly, it is possible to keep a relation between an input gray level and a display luminance constant, irrespective of V-T characteristics of colors of the respective RGB pixels.

(Effect of the Present Invention)

Fig. 7 is a diagram showing an effect that is provided by the liquid crystal display panel 1 according to the present embodiment. In Fig. 7, input gray levels of the pixels are shown on a horizontal axis, whereas normalized luminance values that are displayed on a screen are shown on a vertical axis. (a) of Fig. 7 is a graph showing each relation between an input gray level and a normalized luminance value in regard to each of RGB pixels according to a conventional technique. A curve 71 is a graph for R pixels. A curve 72 is a graph for G pixels, and a curve 73 is a graph for B pixels. On the other hand, (b) of Fig. 7 is a graph showing each relation between an input gray level and a normalized luminance in regard to each of the RGB pixels in the liquid crystal display panel 1 according to the present embodiment.

The graphs of Fig. 7 are obtained from computer simulations.

As shown in (a) of Fig. 7, in the conventional technique, a normalized luminance value, which is determined in accordance with a value of a corresponding input gray level, changes depending on colors of the RGB pixels. More specifically, in a case where input gray level values are identical with each other, normalized luminance of the B pixel > normalized luminance of the G pixel > normalized luminance of G pixel. Such tendency is noticeable in a range of input gray levels from 64 to 224. The conventional technique thus has a problem that a display image color becomes more bluish than an originally intended display image color. This deteriorates display quality of an image.

On the other hand, as shown in (b) of Fig. 7, in the liquid crystal display panel 1 according to the present embodiment, normalized luminance values in one frame, which are determined in accordance with input gray levels are fixed irrespective of colors (RGB) of the pixels. In other words, the graph showing a relation between an input gray level and a normalized luminance has curves each for one of the RGB pixels, which curves are similar to each other and substantially overlap with each other. In the liquid crystal display panel 1 according to the present embodiment, it is therefore possible to faithfully display a display target image in original colors (colors defined by image signals).

As described above, the liquid crystal display panel 1 according to the' present embodiment can provide an effect such that deterioration in display quality of a display image can be prevented. This effect is more significant in the present embodiment as compared to a case of the conventional technique.

Note that in the liquid crystal display panel 1 according to the present invention, the expressions below can be established:

$$Vcs\_r = Vcs\_pp\_r \times \{Ccs\_r /(Ccs\_r + Clc + Cgd + Csd + ...)\},$$

$$Vcs\_g = Vcs\_pp\_g \times \{Ccs\_g /(Ccs\_g + Clc + Cgd + Csd + ...)\},$$

and

$$Vcs\_b = Vcs\_pp\_b \times \{Ccs\_b /(Ccs\_b + Clc + Cgd + Csd + ...)\},$$

where: Vcs_pp_r is an amplitude of a voltage that is applied to the storage capacitor line for the R pixels; Vcs_pp_g is an amplitude of a voltage that is applied to the storage capacitor line for the G pixels; and Vcs_pp_b is an amplitude of a voltage that is applied to the storage capacitor line for the B pixels.

As described above, in the present embodiment, Ccs_r > Ccs_g > Ccs_b. However, a relation of Ccs_r, Ccs_g, and Ccs_b is not limited to this, and may alternatively be Ccs_r ≠ Ccs_g ≠ Ccs_b in accordance with characteristics of colors of respective pixels.

Vd_r, Vd_g, and Vd_b can be calculated by the following expressions.

$$Vd\_r = Vs/2 + Vcs\_r$$

$$Vd\_g = Vs/2 + Vcs\_g ,$$

and

$$Vd\_b = Vs/2 + Vcs\_b .$$

In the present invention, Vcs_r [1] Vcs_g [1] Vcs_b. Accordingly, Vd_r [1] Vd_g [1] Vd_b. That is, a value of the voltage that is applied to liquid crystals can be adjusted in accordance with a color of each of the pixels.

Although Ccs_r > Ccs_g > Ccs_b in the present embodiment, a relation of Ccs_r, Ccs_g, and Ccs_b may alternatively be Ccs_r = Ccs_g > Ccs_b. Specifically, (i) a width of the storage capacitor line which is connected to the R pixels is arranged to be the same as a width of the storage capacitor line which is connected to the G pixels, and (ii) the widths of the storage capacitor lines which are connected to the respective R and G pixels are arranged to be greater than a width of the storage capacitor line which is connected to the B pixels. With this configuration, it is possible to arrange the relation between an input gray level and a normalized luminance in each of the B pixels to be closer to the relation between an input gray level and a normalized luminance in each of the R and G pixels, even in a case where (i) source signals having identical voltage amplitudes are supplied to the respective RGB pixels and (ii) storage capacitor driving signals having identical voltage amplitudes are supplied to the respective RGB pixels. As a result, it becomes possible to improve display quality of a display image, as compared to a case in which the conventional technique is employed.

Figs. 5 and 7 show examples in which source signals of one polarity are supplied to the RGB pixels in one frame. However, the present invention is not limited to this arrangement. It is also possible to supply, to the respective RGB pixel, source signals of polarities that are independent from each other. The following explains such modified examples with reference to Figs. 8 and 9.

(Waveform Chart of Driving Signal: $m$th frame, independent polarity)

Fig. 8 is a diagram showing waveforms of respective driving signals supplied to the RGB pixels in a case where voltages of polarities that are independent from each other are applied to liquid crystals of the RGB pixels. In the example of Fig. 8, a polarity of the source line SS is shifted within one $m$th frame, every turn of the colors of the RGB pixels to be driven. Specifically, in a case where R pixels in an $n$th horizontal row, G pixels in an $n$th horizontao row, and B pixels in an $n$th horizontal row are sequentially driven in this order, the polarity of SS is shifted to (i) positive in driving the R pixels, (ii) negative in driving the G pixels, and (iii) positive in driving the B pixels. That is, the polarity of SS is shifted to positive, negative, and then positive, so as to correspond to R, G, and then B in this sequential order. Note that the order of polarities shifted in the $m+1$th frame following the $m$th frame is inverse to the order of polarities shifted in the $m$th frame. This is described in detail later.

The voltages that are outputted to the respective storage capacitor lines have polarities in accordance with the colors of the pixels. In this case, the polarities of the voltages outputted to the respective storage capacitor lines and the polarities of SS are shifted to the same polarity. Specifically, a polarity of a voltage for CSn_r is shifted to positive. Further, a polarity of a voltage for CSn_g is shifted to negative, and a polarity of a voltage for CSn_r is shifted to positive.

Due to the above shifts in voltages that are outputted to the respective storage capacitor lines, a polarity of Dn_r is shifted to positive. Further, a polarity of Dn_g is shifted to negative, and a polarity of Dn_b is shifted to positive. Note that timings of voltage application shown in Fig. 8 are completely identical with timings of voltage application shown in Fig. 5. For this reason, detailed description of a flow of shifts in the applied voltages is omitted here.

As shown in Fig. 8, when the liquid crystal display panel 1 is driven in the $m$th frame, Vr > Vg > Vb (all voltages are in absolute values) even though VCs_r = Vcs_g = Vcs_b (all voltages are in absolute values). As a result, it becomes possible to make an adjustment so that the values of the voltages which are applied to voltages in the respective RGB pixels are set to values corresponding to the colors of the respective corresponding RGB pixels in one frame. This makes it possible to keep a relation between an input gray level and a display luminance constant, irrespective of color characteristics of the respective RGB pixels. Therefore, it is possible to obtain an effect similar to the effect shown in Fig. 7.

(Waveform Chart of Driving Signal: $m+1$th frame, independent polarity)

In the liquid crystal display panel 1 according to the present embodiment, the pixels are, driven by the so-called frame inversion driving even in a case where the pixels are independently driven. That is, in the $m+1$th frame, the voltages that are supplied to the respective pixels have polarities that are inverse to the polarities of the voltages that have been applied to the respective pixels in the $m$th frame.

Fig. 9 is a diagram showing waveforms of respective driving signals supplied to RGB pixels in a case where voltages of polarities that are independent from each other are applied to the liquid crystals of the RGB pixels. As shown in Fig. 9, the polarities of the voltages (except voltages that are outputted to respective gate bus lines) that are applied to the respective voltage pixels in the $m+1$th frame are inverse to polarities of the voltages that have been applied to the respective pixels in the $m$th frame. Timings of the voltage application are completely identical with those shown in Fig. 8.

The applied voltages are shifted as shown in Fig. 9. In the $m$+1th frame, a polarity of Dn_r is shifted to negative, and a polarity of Dn_g is shifted to positive. Further, a polarity of Dn_b is shifted to negative. That is, when the liquid crystal display panel 1 is driven in the $m$+1th frame, Vr > Vg > Vb (all voltages are in absolute values) even though Vcs_ r = Vcs_g = Vcs_b (all voltages are in absolute values). As a result, it becomes possible to make an adjustment so that values of the voltages that are applied to voltages in the respective RGB pixels are set to values corresponding to the colors of the respective RGB pixels. This makes it possible to keep a relation between an input gray level and a display luminance in each of the RGB pixels constant, irrespective of color characteristics of the respective RGB pixels. Therefore, it is possible to obtain an effect similar to the effect shown in Fig. 7.

[Embodiment 2]

Embodiment 2 according to the present invention is explained below with reference to Figs. 10 through 13. Note that members identical with the members described in Embodiment 1 are given the identical reference numerals, and explanations thereof are omitted here.

The present embodiment explains several modified examples in each of which how storage capacitor lines are provided in a display region of a liquid crystal display panel 1 is varied. First of all, terms that appear in each of Figs. 10 through 13 are defined as follows:

W_r: a width of a portion of CSn_r which portion overlaps with a drain electrode in an R pixel,
W_g: a width of a portion of CSn_g which portion overlaps with a drain electrode in a G pixel,
W_b: a width of a portion of CSn_b which portion overlaps with a drain electrode in a B pixel,
L_r: a length of the portion of Csn_r which portion overlaps with the drain electrode in the R pixel,
L_g: a length of the portion of Csn_g which portion overlaps with the drain electrode in the G pixel, and
L_b: a length of the portion of Csn_b which portion overlaps with the drain electrode in the B pixel,

where n is any integer equal to or greater than 1.

(First Modified Example)

Fig.10 is a diagram showing a part of a display region of a liquid crystal display panel 1 (First Modified Example). In an example shown in Fig. 10, widths of entire portions of respective storage capacitor lines, which portions overlap with drain electrodes in pixels, are varied depending on colors of the pixels. Specifically, W_r > W_g > W_b.

(Second Modified Example)

Fig. 11 is a diagram showing a part of a display region of a liquid crystal display panel 1 (Second Modified Example). In an example shown in Fig. 11, parts of portions of respective storage capacitor lines, which portions overlap with drain electrodes in pixels, have different widths depending on colors of the pixels. Specifically, W_r > W_g > W_b.

(Third Modified Example)

Fig. 12 is a diagram showing a part of a display region of a liquid crystal display panel 1 (Third Modified Example). In an example shown in Fig. 12, at least parts of portions of respective storage capacitor lines, which portions overlap with drain electrodes in pixels, have identical widths that are greater than widths of remaining parts of the portions of the respective storage capacitor lines. Further, at least the parts of the portions of the respective storage capacitor lines have different lengths depending on colors of the pixels. Specifically, W_r = W_g = W_b, and L_r > L_g > L_b.

(Fourth Modified Example)

Fig. 13 is a diagram showing a part of a display region of a liquid crystal display panel 1 (Fourth Modified Example). In an example shown in Fig. 13, at least parts of portions of respective storage capacitor lines, which portions overlap with drain electrodes in pixels, have different widths depending on colors of the pixels. Further, at least the parts of the portions of the respective storage capacitor lines have different lengths depending on the colors of the pixels. Specifically, W_r > W_g > W_b, and L_r > L_g > L_b.

In each of the configurations shown in Figs. 10 and 11, the storage capacitor lines in contact with the drain electrodes in the pixels have areas that respectively have values corresponding to the colors of the pixels. As a result, even in a case where the same voltages are applied to the respective storage capacitor lines, Vr > Vg > Vb. It is therefore possible to obtain an effect similar to that obtained in the configuration shown in Fig. 1.

[Embodiment 3]

Embodiment 3 according to the present invention is explained below with reference to Figs. 14 through 17. Note that members identical with the members of Embodiments explained above are given the identical reference numerals, and explanations thereof are omitted here.

The present embodiment differs from Embodiment 1 in two aspects: one of which is shapes of storage capacitor lines and the other of which is amplitudes of voltages that are outputted to the respective storage capacitor lines. That is, according to the present embodiment, the shapes of the storage capacitor lines are the same irrespective of colors of pixels. On the other hand, amplitudes of the voltages that are outputted to the respective storage capacitor lines are varied in accordance with colors of the pixels. Specifically, Vcs_r > Vcs_g > Vcs_b. With this configuration, it is possible to vary shift amounts in drain voltages, depending on colors of pixels. The above shift amounts are caused by storage capacitors. As a result, it is possible to obtain an effect similar to that of First Embodiment.

(Example of Waveform of Driving Signal: $m^{th}$ frame, common polarity)

Fig. 14 is a diagram showing waveforms of respective driving signals supplied to RGB pixels in a case where positive voltages that are applied to liquid crystals of the RGB pixels.

As shown in Fig. 14, a voltage Vcs_r that is outputted to CSn_r is greater than a voltage Vcs_g that is outputted to CSn_g. The voltage Vcs_g that is outputted to CSn_g is greater than a voltage Vcs_b that is outputted to CSn_b. Accordingly, Vcs_r > Vcs_g > Vcs_b. As a result, Vr > Vg > Vb, as shown in Fig. 14. With this arrangement, it is therefore possible to obtain effects that are similar to those of First Embodiment shown in Fig. 5.

(Example of Waveform of Driving Signal: $m$+1$^{th}$ frame, common polarity)

Fig. 15 is a diagram showing waveforms of respective driving signals supplied to RGB pixels in a case where negative voltages are applied to liquid crystals of the respective RGB pixels. The voltages whose waveforms are as shown in Fig. 14 are supplied to the respective RGB pixels in an $m^{th}$ frame. Then, the voltages whose polarities are inverse to polarities of the voltages that were applied in the $m^{th}$ frame are supplied to the respective RGB pixels in an $m^{th}$ frame. Consequently, even in a case where the voltages have negative polarities, Vcs_r > Vcs_g > Vcs_b. Accordingly, Vr > Vg > Vb, as shown in Fig. 15. Even in an example shown in Fig. 15, it is therefore possible to obtain effects that are similar to those of First Embodiment shown in Fig. 5.

Note that, although Vcs_r > Vcs_g > Vcs_b in the present embodiment, a relation of Vcs_r, Vcs_g, and Ccs_b may alternatively be Vcs_r = Vcs_g > Ccs_b. Specifically, (i) the amplitude of the voltage that is outputted to the storage capacitor line connected to the R pixels is arranged to be the same as the amplitude of the voltage that is outputted to the storage capacitor line connected to the G pixels, and (ii) the amplitude of the voltage that is outputted to the storage capacitor line connected to the B pixels are arranged to be smaller than the amplitudes of the voltages that are outputted to the storage capacitor lines each connected to the respective R and G pixels.

With the configuration, it is possible to arrange a relation between an input gray level and a normalized luminance in each of the B pixels to be closer to the relation between an input gray level and a normalized luminance in each of the R and G pixels, even in a case where (i) source signals having identical voltage amplitudes are supplied to the respective RGB pixels and, further, (ii) storage capacitance driving signals having identical voltage amplitudes are used for the respective RGB pixels. With this arrangement, consequently, it is possible to improve display quality of a display image, as compared to a case in which the conventional technique is employed.

In a case where the amplitudes of voltages which are outputted to the respective storage capacitor lines are changed depending on colors of the pixels, it is not necessarily required to change both High and Low values of applied voltages. In a liquid crystal display panel 1 according to the present invention, the following expressions can be established:

$$Vcs\_pp\_r = Vcs\_r\_high - Vcs\_r\_low,$$

$$Vcs\_pp\_g = Vcs\_g\_high - Vcs\_g\_low,$$

and

$$Vcs\_pp\_b = Vcs\_b\_high - Vcs\_b\_low,$$

where: (i) Vcs_r_high is a High value of a voltage that is outputted to CSn_r, whereas Vcs_r_low is a Low value of the voltage that is outputted to CSn_r; (ii) Vcs_g_high is a High value of a voltage that is outputted to CSn_g, whereas Vcs_g_low is a Low value of the voltage that is outputted to CSn_g; and (iii) Vcs_b_high is a High value of a voltage that is outputted to CSn_b, whereas Vcs_b_low is a Low value of the voltage that is outputted to CSn_b.

In this case, it may be arranged such that (i) either one of High values and Low values of the respective voltages are identical for the respective pixels and (ii) the other of High values and Low values of the respective voltages are varied depending on colors of the pixels. For example, in a case where the Low values of the respective voltages are arranged to be identical for the respective pixels, the following expressions are established:

$$Vcs\_pp\_r = Vcs\_r\_high - Vcs\_low,$$

$$Vcs\_pp\_g = Vcs\_g\_high - Vcs\_low,$$

and

$$Vcs\_pp\_b = Vcs\_b\_high - Vcs\_low.$$

Even in this case, $Vcs\_pp\_r \neq Vcs\_pp\_g \neq Vcs\_pp\_b$ Accordingly, $Vsc\_r \neq Vcs\_g \neq Vcs\_b$. It is therefore possible to obtain an effect similar to the effect shown in Fig. 7.

(Example of Waveform of Driving Signal: $m^{th}$ frame, independent polarity)

Fig. 16 is a diagram showing waveforms of respective driving signals supplied to RGB pixels in a case where voltages of polarities that are independent from each other are applied to liquid crystals of the RGB pixels.

As shown in Fig. 16, an absolute value of an amplitude of a voltage Vcs_r that is outputted to Csn_r is greater than an absolute value of an amplitude of a voltage Vcs_g that is outputted to CSn_g. The absolute value of the amplitude of the voltage Vcs_g outputted to CSn_g is greater than an absolute value of an amplitude of a voltage Vcs_b that is outputted to CSn_b. As a result, a relation of Vcs_r, Vcs_g, and Vcs_b in terms of the absolute values of their amplitudes is Vcs_r > Vcs_g > Vcs_b. Accordingly, a relation of Vr, Vg, and Vb in terms of their absolute values is Vr > Vg > Vb, as shown in Fig. 16. In the example shown in Fig. 16, it is therefore possible to obtain effects that are similar to those of Embodiment 1.

(Example of Waveform of Diving Signal: $m+1^{th}$ frame, independent polarity)

Fig. 17 is a diagram showing waveforms of respective driving signals supplied to RGB pixels in a case where voltages of polarities that are independent from each other are applied to liquid crystals of the RGB pixels. The voltages whose waveforms are as shown in Fig. 14 are supplied to the RGB pixels in an $m^{th}$ frame. Then, in an $m+1^{th}$ frame, the voltages whose polarities are inverse to polarities of the voltages in the $m^{th}$ frame (previous frame) are independently supplied to the respective RGB pixels. Even in a case where the polarities of the voltages are inverted from those of the voltages in the previous frame, a relation of Vcs_r, Vcs_g, and Vcs_b in terms of their absolute values is Vcs_r > Vcs_g > Vcs_b. Consequently, a relation of Vr, Vg, and Vb in terms of their absolute values is Vr > Vg > Vb, as shown in Fig. 17. It is therefore possible, even in the example shown in Fig. 17, to obtain effects that are similar to those of Embodiment 1.

(Supplementary Note)

The present invention is not limited to any of the embodiments thus described. The present invention can be varied in many ways within the scope of the claims by one skilled in the art. That is, it is possible to obtain a new embodiment by combining properly modified technical means within the scope of the claims.

For example, the present invention can be realized as liquid crystal panels 1 of a variety of liquid crystal modes. Such variety of liquid crystal modems specifically encompasses a VA (Vertical Align) mode, an IPS (In Plaine) mode, an AFFS (Advanced Fringe Field Switching) mode, a TN (Twisted Nematic) mode, and an OCB (Optically Compensated Bend) mode.

Further, a liquid crystal display device including any of the liquid crystal display panel 1 of the present invention can obviously be realized.

Further, it is preferable that the liquid crystal display panel of the present invention is configured so that at least a portion of the each storage capacitor line has a shape corresponding to the one specific primary color of each of the pixels, the portion overlapping with the drain electrode.

According to the configuration, even in a case where voltages applied to the respective storage capacitor lines have the same amplitudes, effective voltages applied to the respective storage capacitor lines connected to drain electrodes have values each corresponding to a color of each of the pixels. With this configuration, it is possible to easily control the effective voltages.

Further, it is preferable that the liquid crystal display panel of the present invention is configured so that the shape means a width of the each storage capacitor line.

According to the configuration, by simple processing, the effective voltages applied to the respective storage capacitors can be set in accordance with colors of the respective pixels.

Further, it is preferable that the liquid crystal display panel of the present invention is configured so that the shape means a length of the each storage capacitor line.

According to the configuration, by simple processing, the effective voltages applied to the respective storage capacitors can be set in accordance with colors of the respective pixels.

Further, it is preferable that the liquid crystal display panel of the present invention is configured so that: the one specific primary colors are red, green, or blue; and the portion of the each storage capacitor line connected to pixels of blue has an area that is narrower than an area of the portion of the each storage capacitor line connected to the pixels of red or green.

According to the configuration, the input gray scale - transmittance characteristic of the pixels of blue can be arranged to be closer to those of the pixels of red and green. It is therefore possible to prevent deterioration in display quality of an image displayed by three primary colors of red, blue, and green.

Further, it is preferable that the liquid crystal display panel of the present invention is configured so that: the one specific primary color is red, green, or blue; and the portion of the each storage capacitor line connected to pixels of red has an area that is broader than an area of the portion of the each storage capacitor line connected to the pixels of green or blue.

According to the configuration, the input gray scale - transmittance characteristic of the pixels of red can be arranged to be closer to those of the pixels of blue and green. It is therefore possible to prevent deterioration in display quality of an image displayed by three primary colors of red, blue, and green.

Further, it is preferable that the liquid crystal display panel of the present invention further includes a storage capacitor line driving circuit for outputting a voltage to the each storage capacitor line, the voltage having a value corresponding to the specific one primary color of the pixels connected to the each storage capacitor line.

With the configuration, even in a case where the storage capacitor lines have same shapes irrespective of colors of the pixels, it is still possible to arrange the same amplitudes of the effective voltages applied to the respective storage capacitors to correspond to colors of the pixels. It is therefore possible to obtain the effect of the present invention without carrying out any special processing to the display region of the liquid crystal display panel.

Further, it is preferable that the liquid crystal display panel of the present invention is configured so that: the one specific primary color is red, blue, or green; and the storage capacitor line driving circuit causes a shift amount in a voltage outputted to the each storage capacitor line connected to pixels of blue to be smaller than a shift amount in a voltage outputted to the each storage capacitor line connected to pixels of red or green.

According to the configuration, the input gray scale - transmittance characteristic of the pixels of blue can be arranged to be close to those of the pixels of red and green. It is therefore possible to prevent deterioration in display quality of an image displayed by three primary colors of red, blue, and green.

Further, the liquid crystal display panel of the present invention is the liquid crystal display panel as set forth in Claim 7 or 8 which is configured so that: the specific primary color is red, blue, or green; and the storage capacitor line driving circuit causes a shift amount in a voltage outputted to the each storage capacitor line connected to pixels of red to be larger than a shift amount in a voltage outputted to the each storage capacitor line connected to pixels of green or blue.

According to the configuration, the input gray scale - transmittance characteristic of the pixels of red can be arranged to be closer to those of the pixels of blue and green. It is therefore possible to prevent deterioration in display quality of an image displayed by three primary colors of red, blue, and green.

The invention being thus described, it will be obvious that the same way may be varied in many ways. Such variations are not to be regarded as a departure from the spirit and scope of the invention, and all such modifications as would be obvious to one skilled in the art are intended to be included within the scope of the following claims.

Industrial Applicability

The present invention is widely applicable to various types of liquid crystal display panels and a liquid crystal display device including any of such various types of liquid crystal panels.

Reference Signs List

1. liquid crystal display panel
2. display region
3. source driver
4. gate driver
5. storage capacitor driver (storage capacitor driving circuit)
6. common electrode driver 11. TFT
12. liquid crystal cell
13. storage capacitor
G1_r ~ Gn_b. gate bus lines
S1 ~ Sm. source bus lines
CS1_r ~ CSn_b. storage capacitor lines
COM. common electrode line

## Claims

1. A liquid crystal display panel of an active matrix type, increasing a voltage applied to liquid crystals by applying a voltage to each storage capacitor line connected to a storage capacitor in each of pixels, the voltage applied to the liquid crystals being increased when an image is to be displayed,
the pixels being connected to the each storage capacitor line in such a manner that a plurality of pixels of one specific primary color are connected to a specific storage capacitor line, the plurality of pixels of the one specific primary color being in a horizontal row of a display region of the liquid, crystal display panel, the plurality of pixels each being connected to the specific storage capacitor line via the storage capacitor,
the pixels each including a drain electrode of a switching element to which a voltage is applied, the voltage applied to the drain electrode taking a value in accordance with an effective voltage to be applied to the storage capacitor,
the value corresponding to the specific one primary color of each of the pixels including the storage capacitor.

2. The liquid crystal display panel as set forth in Claim 1, wherein
at least a portion of the each storage capacitor line has a shape corresponding to the one specific primary color of each of the pixels, the portion overlapping with the drain electrode.

3. The liquid crystal display panel as set forth in Claim 2, wherein
the shape means a width of the each storage capacitor line.

4. The liquid crystal display panel as set forth in Claim 2, wherein
the shape means a length of the each storage capacitor line.

5. The liquid crystal display panel as set forth in any one of Claims 2 through 4, wherein:

the one specific primary colors are red, green, or blue; and
the portion of the each storage capacitor line connected to pixels of blue has an area that is narrower than an area of the portion of the each storage capacitor line connected to the pixels of red or green.

6. The liquid crystal display panel as set forth in any one of Claims 2 through 4, wherein:

the one specific primary color is red, green, or blue; and

the portion of the each storage capacitor line connected to pixels of red has an area that is broader than an area of the portion of the each storage capacitor line connected to the pixels of green or blue.

7. The liquid crystal display panel as set forth in any one of Claims 1 through 5, further comprising a storage capacitor line driving circuit for outputting a voltage to the each storage capacitor line, the voltage having a value corresponding to the specific one primary color of the pixels connected to the each storage capacitor line.

8. The liquid crystal display panel as set forth in Claim 7, wherein:

the one specific primary color is red, blue, or green; and

the storage capacitor line driving circuit causes a shift amount in a voltage outputted to the each storage capacitor line connected to pixels of blue to be smaller than a shift amount in a voltage outputted to the each storage capacitor line connected to pixels of red or green.

9. The liquid crystal display panel as set forth in Claim 7 or 8, wherein:

the specific primary color is red, blue, or green; and

the storage capacitor line driving circuit causes a shift amount in a voltage outputted to the each storage capacitor line connected to pixels of red to be larger than a shift amount in a voltage outputted to the each storage capacitor line connected to pixels of green or blue.

10. A liquid crystal display device, comprising a liquid crystal display panel as set forth in any one of Claims 1 through 9.

F I G. 1

FIG. 2

FIG. 3

FIG. 4

(a)

(b)

(c)

(d)

F I G. 5

Gn_r

Gn_g

Gn_b

SS

CSn_r $\updownarrow$Vcs_r

CSn_g $\updownarrow$Vcs_g

CSn_b $\updownarrow$Vcs_b

Dn_r $\updownarrow$Vr

Dn_g $\updownarrow$Vg

Dn_b $\updownarrow$Vb

F I G. 6

F I G. 7

(a)

(b)

F I G. 8

FIG. 9

FIG. 10

FIG. 11

F I G. 1 2

F I G. 1 3

FIG. 14

F I G. 1 5

FIG. 16

Gn_r

Gn_g

Gn_b

SS

CSn_r    Vcs_r

CSn_g    Vcs_g

CSn_b    Vcs_b

Dn_r    Vr

Dn_g    Vg

Dn_b    Vb

FIG. 17

**INTERNATIONAL SEARCH REPORT**

| International application No. |
| --- |
| PCT/JP2010/001173 |

A.   CLASSIFICATION OF SUBJECT MATTER
*G02F1/133*(2006.01)i, *G02F1/1368*(2006.01)i, *G09F9/30*(2006.01)i, *G09F9/35*(2006.01)i, *G09G3/20*(2006.01)i, *G09G3/36*(2006.01)i

According to International Patent Classification (IPC) or to both national classification and IPC

B.   FIELDS SEARCHED

Minimum documentation searched (classification system followed by classification symbols)
G02F1/133, G02F1/1368, G09F9/30, G09F9/35, G09G3/20, G09G3/36

Documentation searched other than minimum documentation to the extent that such documents are included in the fields searched
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
| --- | --- | --- |
| P,X<br>P,A | JP 2009-282109 A  (Toshiba Mobile Display Co., Ltd.),<br>03 December 2009 (03.12.2009),<br>2nd carrying-out mode; fig. 7 to 10<br>(Family: none) | 1,7,10<br>2-6,8-9 |
| Y<br>A | JP 2009-36971 A  (Toshiba Matsushita Display Technology Co., Ltd.),<br>19 February 2009 (19.02.2009),<br>Best Mode for carrying out the Invention;<br>fig. 1 to 7<br>(Family: none) | 1,10<br>2-9 |

☒   Further documents are listed in the continuation of Box C.          ☐          See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>     19 April, 2010 (19.04.10) | Date of mailing of the international search report<br>     27 April, 2010 (27.04.10) |
| --- | --- |
| Name and mailing address of the ISA/<br>     Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2010/001173

C (Continuation). DOCUMENTS CONSIDERED TO BE RELEVANT

| Category* | Citation of document, with indication, where appropriate, of the relevant passages | Relevant to claim No. |
|---|---|---|
| Y<br>A | JP 2002-32051 A (Sony Corp.),<br>31 January 2002 (31.01.2002),<br>Mode for carrying out the Invention; fig. 1, 5<br>& US 2002/0033809 A1 & EP 1174849 A2<br>& EP 1174849 A3 & KR 2002/0014679 A<br>& CN 1338719 A | 1,10<br>2-9 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001255851 A